# EUROPEAN PATENT APPLICATION

(11) **EP 4 576 533 A1**
(43) Date of publication of application: **25.06.2025**
(21) Application number: 24221401.3
(22) Date of filing: 19.12.2024
(51) Int. Cl.: H02M 1/00, H02M 1/36, H02M 3/335

(54) **POWER CONVERTER AND AUXILIARY POWER SUPPLY CIRCUIT**

(30) Priority: 22.12.2023 CN 202311791190
(71) Applicant: Huawei Digital Power Technologies Co., Ltd., Shenzhen, Guangdong 518043 (CN)
(72) Inventor: GAO, Yachen, Shenzhen, 518043 (CN)
(74) Representative: Isarpatent

(57) **Abstract**

This application provides a power converter and an auxiliary power supply circuit. The power converter includes a power conversion circuit, an auxiliary power supply circuit, and a power conversion controller. The auxiliary power supply circuit includes a first switching transistor, at least one second switching transistor, at least one first series resistor, a transformer, a first capacitor, and an auxiliary power supply controller. First terminals of the first switching transistor and the second switching transistor are connected to a positive direct current bus, second terminals of the first switching transistor and the second switching transistor are connected to a negative direct current bus through the first capacitor, a control terminal of the second switching transistor is connected to the first terminal of the first switching transistor, the second switching transistor is connected in parallel to the first series resistor, two terminals of the first capacitor are connected to two terminals of a primary-side winding of the transformer, and a second terminal of the primary-side winding of the transformer is connected to the negative direct current bus. The second switching transistor is configured to conduct an electrical connection between the positive direct current bus and the first capacitor, and is turned off when the first switching transistor is turned on. According to this application, power supply stability can be ensured when an input voltage fluctuates, and startup efficiency can be improved.

## Description

### TECHNICAL FIELD

This application relates to the field of power electronics, and in particular, to a power converter and an auxiliary power supply circuit.

### BACKGROUND

An architecture of a power supply system is a key indicator that determines performance of a circuit. For example, in a design of a related electronic device, for a plurality of high-input-voltage scenarios, because an input voltage of a power supply is high, if a high voltage is directly used to directly drive a chip, requirements on a design and costs of the chip are high. Therefore, the power supply system of the electronic device usually includes an auxiliary power supply circuit configured to provide a stable and clean low-voltage power supply signal, and can drive a plurality of components that have a high requirement on power supply quality by using the auxiliary power supply circuit, to improve overall performance of the circuit. A design of the auxiliary power supply circuit greatly affects an overall capability of a set of circuits. A stable auxiliary power supply circuit structure and control strategy become a top priority in the power supply system. However, in an existing auxiliary power supply circuit design, a speed at which an auxiliary power supply circuit starts a chip is insufficient, stability of supplying power to a load is low when an input voltage of a power supply fluctuates, and no-load power consumption is high in a driving process of the auxiliary power supply circuit. Consequently, reliability of a power supply system of an electronic device is reduced.

### SUMMARY

Embodiments of this application provide a power converter and an auxiliary power supply circuit, to ensure power supply stability when an input voltage fluctuates, improve startup efficiency, and reduce a no-load loss in a driving process.

According to a first aspect, this application provides a power converter. The power converter includes a power conversion circuit, an auxiliary power supply circuit, and a power conversion controller. An input terminal of the power conversion circuit is configured to connect to a direct current power supply through a direct current bus, and the auxiliary power supply circuit is connected in parallel to the direct current bus. The auxiliary power supply circuit includes a first switching transistor, at least one second switching transistor, at least one first series resistor, a transformer, a first capacitor, and an auxiliary power supply controller. A first terminal of the first switching transistor and a first terminal of the second switching transistor are connected to a positive direct current bus, a second terminal of the first switching transistor and a second terminal of the second switching transistor are connected to a negative direct current bus through the first capacitor, a control terminal of the second switching transistor is connected to the first terminal of the first switching transistor, the first terminal of the second switching transistor is connected to the second terminal of the second switching transistor through the first series resistor, two terminals of the first capacitor are connected to two terminals of a primary-side winding of the transformer, a first terminal of the primary-side winding of the transformer is connected to the positive direct current bus through a drive circuit, and a second terminal of the primary-side winding of the transformer is connected to the negative direct current bus. The second switching transistor is configured to conduct an electrical connection between the positive direct current bus and the first capacitor, and is turned off when the first switching transistor is turned on. The first capacitor is configured to supply power to the auxiliary power supply controller. The auxiliary power supply controller is configured to: after power-on, control the first switch to be turned on, and control a switching transistor action in the drive circuit to control a magnetic flux change of the primary-side winding of the transformer, so that a secondary-side winding of the transformer supplies power to the power conversion controller.

In this application, in the auxiliary power supply circuit, the second switching transistor is turned off when the first switching transistor is turned on, and when the second switching transistor is turned off, the series resistor connected to the second switching transistor is enabled to be connected in series to a power supply loop, increasing overall resistance of the auxiliary power supply circuit. The newly added series resistor can bear a part of voltage fluctuation on the direct current bus, so that a voltage change amplitude of the primary-side winding of the transformer is reduced, and power supply stability of the auxiliary power supply circuit is improved. When a plurality of second switching transistors are included, the first capacitor may be charged through a plurality of power supply paths, and the auxiliary power supply controller is started faster. In addition, the second switching transistor is turned off when the first switching transistor is turned on, and a path on which the first switching transistor is located supplies power to the transformer, so that some energy losses can be reduced.

In a possible implementation, the auxiliary power supply controller is connected between the first capacitor and the transformer. Specifically, the auxiliary power supply controller may include a second capacitor and a chip. One terminal of the second capacitor may be connected to one terminal of the primary-side winding of the transformer through the chip, and the other terminal of the second capacitor may be connected to the other terminal of the primary-side winding of the transformer. The second capacitor in the auxiliary power supply controller may obtain power from the first capacitor after the first capacitor is charged, to be started based on electric energy stored in the second capacitor.

In a possible implementation, the auxiliary power supply circuit includes a third switching transistor, a first terminal and a second terminal of the third switching transistor are respectively connected to the control terminal of the second switching transistor and the second terminal of the second switching transistor, and a control terminal of the third switching transistor is connected to the positive direct current bus through a voltage regulator unit. The voltage regulator unit is configured to: when a voltage value for two terminals of the voltage regulator unit is greater than a voltage regulating threshold, conduct a connection between the control terminal of the third switching transistor and the positive direct current bus, so that the third switching transistor is turned on and the second switching transistor is turned off. When a voltage on the direct current bus is excessively high, the voltage regulator unit may support a high voltage and conduct a connection between the control terminal of the third switching transistor and the positive direct current bus, so that the third switching transistor is turned on, and the voltage regulator unit also has a divided voltage. This avoids damage caused by an excessively high voltage for two terminals of the third switching transistor, and improves working safety of the auxiliary power supply circuit.

In a possible implementation, the voltage regulator unit is a voltage regulator diode, an anode of the voltage regulator diode is connected to the control terminal of the third switching transistor, and a cathode of the voltage regulator diode is connected to the positive direct current bus. When a voltage on the direct current bus is excessively high, the voltage regulator diode is reversely broken down. In this case, the voltage regulator diode may conduct a connection between the control terminal of the third switching transistor and the positive direct current bus, so that the third switching transistor is turned on, and the voltage regulator diode also has a divided voltage. This avoids damage caused by an excessively high voltage for two terminals of the third switching transistor, and improves working safety of the auxiliary power supply circuit.

In a possible implementation, the switching transistor in the auxiliary power supply circuit is a MOS transistor, a first terminal of each switching transistor is a drain, a second connection terminal is a source, and a control terminal is a gate. Alternatively, the switching transistor in the auxiliary power supply circuit is an IGBT transistor, a first terminal of each switching transistor is a collector, a second terminal is an emitter, and a control terminal is a gate. Alternatively, the switching transistor in the auxiliary power supply circuit is a triode, a first terminal of each switching transistor is a collector, a second terminal is an emitter, and a control terminal is a base.

In a possible implementation, the first terminals of the first switching transistor and the second switching transistor are connected to the positive direct current bus through one series resistor, and the control terminal of the third switching transistor is connected to the positive direct current bus sequentially through the voltage regulator unit and one series resistor. The foregoing series resistors may respectively divide voltages for corresponding switching transistors, to prevent voltages for two terminals of the switching transistors in the auxiliary power supply circuit from being excessively high.

In a possible implementation, the second terminal of the third switching transistor is connected to the second terminal of the second switching transistor through a diode, and the diode can prevent a current flowing through the first switching transistor or the second switching transistor from flowing back to the third switching transistor. A connection terminal between the first switching transistor and the first capacitor is connected to the primary-side winding of the transformer through another diode. The diode can prevent a current flowing to the transformer from flowing back to the first switching transistor or the second switching transistor, to prevent the switching transistor from being damaged due to flowing back of the current.

In a possible implementation, the auxiliary power supply circuit includes two second switching transistors. A first terminal of one of the two second switching transistors is connected to the control terminal of the third switching transistor through the voltage regulator unit. In the foregoing charging process of the first capacitor, because the first capacitor may be charged through a plurality of power supply paths on which the two second switching transistors are located, the first capacitor is charged faster, and the auxiliary power supply controller is started faster.

According to a second aspect, this application provides an auxiliary power supply circuit. The auxiliary power supply circuit includes a first switching transistor, at least one second switching transistor, at least one first series resistor, a transformer, a first capacitor, and an auxiliary power supply controller. A first terminal of the first switching transistor and a first terminal of the second switching transistor are connected to a positive direct current bus, a second terminal of the first switching transistor and a second terminal of the second switching transistor are connected to a negative direct current bus through the first capacitor, a control terminal of the second switching transistor is connected to the first terminal of the first switching transistor, the first terminal of the second switching transistor is connected to the second terminal of the second switching transistor through the first series resistor, two terminals of the first capacitor are connected to two terminals of a primary-side winding of the transformer, a first terminal of the primary-side winding of the transformer is connected to the positive direct current bus through a drive circuit, and a second terminal of the primary-side winding of the transformer is connected to the negative direct current bus. The second switching transistor is configured to conduct a connection between the positive direct current bus and the first capacitor, and is turned off when the first switching transistor is turned on. The first capacitor is configured to supply power to the auxiliary power supply controller. The auxiliary power supply controller is configured to: after power-on, control the first switch to be turned on, and control a switching transistor action in the drive circuit to change a magnetic flux of the primary-side winding of the transformer, so that a secondary-side winding of the transformer supplies power to a load.

In this application, in the auxiliary power supply circuit, the second switching transistor is turned off when the first switching transistor is turned on, and when the second switching transistor is turned off, the series resistor connected to the second switching transistor is enabled to be connected in series to a power supply loop, increasing overall resistance of the auxiliary power supply circuit. The newly added series resistor can bear a part of voltage fluctuation on the direct current bus, so that a voltage change amplitude of the primary-side winding of the transformer is reduced, and power supply stability of the auxiliary power supply circuit is improved. When a plurality of second switching transistors are included, the first capacitor may be charged through a plurality of power supply paths, and the auxiliary power supply controller is started faster. In addition, the second switching transistor is turned off when the first switching transistor is turned on, and a path on which the first switching transistor is located supplies power to the transformer, so that some energy losses can be reduced.

In a possible implementation, the auxiliary power supply controller is connected between the first capacitor and the transformer. Specifically, the auxiliary power supply controller may include a second capacitor and a chip. One terminal of the second capacitor may be connected to one terminal of the primary-side winding of the transformer through the chip, and the other terminal of the second capacitor may be connected to the other terminal of the primary-side winding of the transformer. The second capacitor in the auxiliary power supply controller may obtain power from the first capacitor after the first capacitor is charged, to be started based on electric energy stored in the second capacitor.

In a possible implementation, the auxiliary power supply circuit includes a third switching transistor, a first terminal and a second terminal of the third switching transistor are respectively connected to the control terminal of the second switching transistor and the second terminal of the second switching transistor, and a control terminal of the third switching transistor is connected to the positive direct current bus through a voltage regulator unit. The voltage regulator unit is configured to: when a voltage value for two terminals of the voltage regulator unit is greater than a voltage regulating threshold, conduct a connection between the control terminal of the third switching transistor and the positive direct current bus, so that the third switching transistor is turned on and the second switching transistor is turned off. When a voltage on the direct current bus is excessively high, the voltage regulator unit may support a high voltage and conduct a connection between the control terminal of the third switching transistor and the positive direct current bus, so that the third switching transistor is turned on, and the voltage regulator unit also has a divided voltage. This avoids damage caused by an excessively high voltage for two terminals of the third switching transistor, and improves working safety of the auxiliary power supply circuit.

In a possible implementation, the voltage regulator unit is a voltage regulator diode, an anode of the voltage regulator diode is connected to the control terminal of the third switching transistor, and a cathode of the voltage regulator diode is connected to the positive direct current bus. When a voltage on the direct current bus is excessively high, the voltage regulator diode is reversely broken down. In this case, the voltage regulator diode may conduct the connection between the control terminal of the third switching transistor and the positive direct current bus, so that the third switching transistor is turned on, and the voltage regulator diode also has a divided voltage. This avoids damage caused by an excessively high voltage for two terminals of the third switching transistor, and improves working safety of the auxiliary power supply circuit.

In a possible implementation, the switching transistor in the auxiliary power supply circuit is a MOS transistor, a first terminal of each switching transistor is a drain, a second connection terminal is a source, and a control terminal is a gate. Alternatively, the switching transistor in the auxiliary power supply circuit is an IGBT transistor, a first terminal of each switching transistor is a collector, a second terminal is an emitter, and a control terminal is a gate. Alternatively, the switching transistor in the auxiliary power supply circuit is a triode, a first terminal of each switching transistor is a collector, a second terminal is an emitter, and a control terminal is a base.

In a possible implementation, the first terminals of the first switching transistor and the second switching transistor are connected to the positive direct current bus through one series resistor, and the control terminal of the third switching transistor is connected to the positive direct current bus sequentially through the voltage regulator unit and one series resistor. The foregoing series resistors may respectively divide voltages for corresponding switching transistors, to prevent voltages for two terminals of the switching transistors in the auxiliary power supply circuit from being excessively high.

In a possible implementation, the second terminal of the third switching transistor is connected to the second terminal of the second switching transistor through a diode, and the diode can prevent a current flowing through the first switching transistor or the second switching transistor from flowing back to the third switching transistor. A connection terminal between the first switching transistor and the first capacitor is connected to the primary-side winding of the transformer through another diode. The diode can prevent a current flowing to the transformer from flowing back to the first switching transistor or the second switching transistor, to prevent the switching transistor from being damaged due to flowing back of the current.

In a possible implementation, the auxiliary power supply circuit includes two second switching transistors. A first terminal of one of the two second switching transistors is connected to the control terminal of the third switching transistor through the voltage regulator unit. In the foregoing charging process of the first capacitor, because the first capacitor may be charged through a plurality of power supply paths on which the two second switching transistors are located, the first capacitor is charged faster, and the auxiliary power supply controller is started faster.

### BRIEF DESCRIPTION OF DRAWINGS

FIG. 1 is a schematic of an application scenario of an auxiliary power supply circuit according to this application;
FIG. 2 is a schematic of another application scenario of an auxiliary power supply circuit according to this application;
FIG. 3 is a schematic of another application scenario of an auxiliary power supply circuit according to this application;
FIG. 4 is a schematic of another application scenario of an auxiliary power supply circuit according to this application;
FIG. 5 is a schematic of another application scenario of an auxiliary power supply circuit according to this application;
FIG. 6 is a schematic of a structure of an auxiliary power supply circuit according to this application;
FIG. 7 is a schematic of another structure of an auxiliary power supply circuit according to this application;
FIG. 8 is a schematic of another structure of an auxiliary power supply circuit according to this application;
FIG. 9 is a schematic of another structure of an auxiliary power supply circuit according to this application;
FIG. 10 is a schematic of another structure of an auxiliary power supply circuit according to this application;
FIG. 11 is a schematic of another structure of an auxiliary power supply circuit according to this application;
FIG. 12 is a schematic of another structure of an auxiliary power supply circuit according to this application;
FIG. 13 is a schematic of another structure of an auxiliary power supply circuit according to this application; and
FIG. 14 is a schematic of another structure of an auxiliary power supply circuit according to this application.

### DESCRIPTION OF EMBODIMENTS

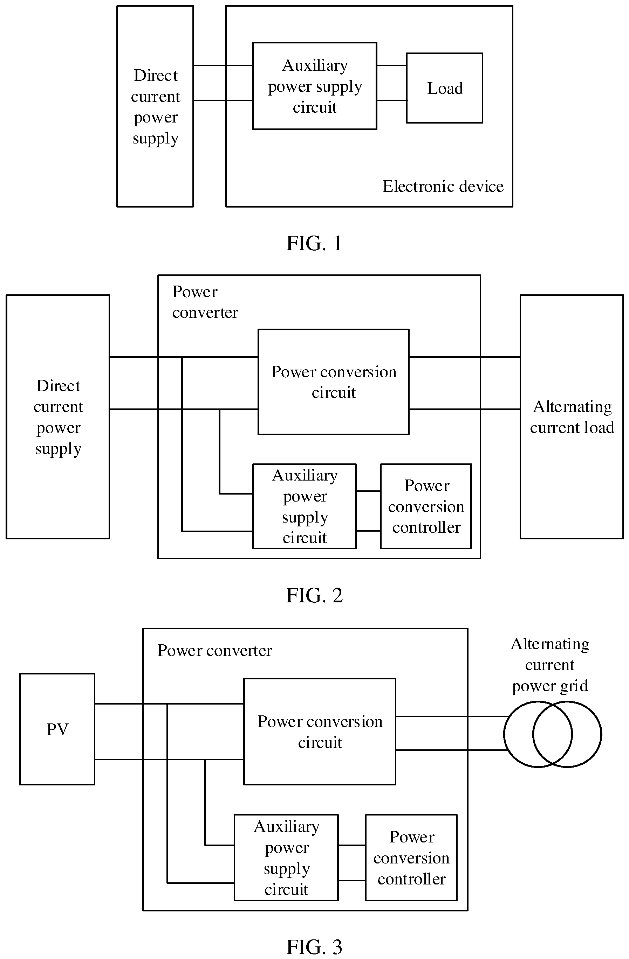

FIG. 1 is a schematic of an application scenario of an auxiliary power supply circuit according to this application. The auxiliary power supply circuit provided in this application may be used in an electronic device. One terminal of the auxiliary power supply circuit may be connected to a direct current power supply through a direct current bus, and the other terminal of the auxiliary power supply circuit may be connected to a load in the electronic device. The auxiliary power supply circuit may perform direct current power conversion based on a direct current provided by the direct current power supply, to provide a stable low-voltage direct current to the load in the electronic device. Herein, the electronic device may be a power converter, a switch mode power supply, a photovoltaic optimizer, an energy storage control device, a power management device, or the like. This may be specifically determined based on an actual application scenario requirement, and is not limited herein. For example, the auxiliary power supply circuit is configured to drive the power converter. FIG. 2 is a schematic of another application scenario of an auxiliary power supply circuit according to this application. The power converter shown in FIG. 2 includes a power conversion circuit, an auxiliary power supply circuit, and a power conversion controller. One terminal of the power conversion circuit is configured to connect to a direct current power supply through a direct current bus, and the other terminal of the power conversion circuit is connected to an alternating current load. One terminal of the auxiliary power supply circuit may be connected to the direct current bus, and the other terminal of the auxiliary power supply circuit may be connected to the power conversion controller. The auxiliary power supply circuit may perform direct current power conversion based on a direct current provided by the direct current power supply, to provide a stable low-voltage direct current for a power consumption component (for example, the power conversion controller) in the power converter. The power conversion controller in the power converter may control, based on the direct current provided by the auxiliary power supply circuit, a switching transistor in the power conversion circuit to be turned on or off, so that the power conversion circuit performs inverse conversion on the direct current provided by the direct current power supply, and outputs an alternating current obtained through the inverse conversion to supply power to the alternating current load. The direct current power supply may be a photovoltaic module. An input terminal of the power converter may be connected to the photovoltaic module. The power converter may perform inverse conversion on a direct current provided by the photovoltaic module, to supply power to an alternating current power grid. FIG. 3 is a schematic of another application scenario of an auxiliary power supply circuit according to this application. The power converter shown in FIG. 3 includes a power conversion circuit, an auxiliary power supply circuit, and a power conversion controller. One terminal of the power conversion circuit is configured to connect to a photovoltaic PV module through a direct current bus, and the other terminal of the power conversion circuit is connected to an alternating current power grid. One terminal of the auxiliary power supply circuit may be connected to the direct current bus, and the other terminal of the auxiliary power supply circuit may be connected to the power conversion controller. The auxiliary power supply circuit may perform direct current power conversion based on a direct current provided by the photovoltaic PV module, to provide a stable low-voltage direct current for a power consumption component (for example, the power conversion controller) in the power converter. The power conversion controller in the power converter may control, based on the direct current provided by the auxiliary power supply circuit, a switching transistor in the power conversion circuit to be turned on or off, so that the power conversion circuit performs inverse conversion on the direct current provided by the photovoltaic PV module, and outputs an alternating current obtained through the inverse conversion to supply power to the alternating current power grid.

In the application scenarios shown in FIG. 1 to FIG. 3, in a process in which the auxiliary power supply circuit supplies power to the power consumption load in the electronic device, a voltage on the direct current bus may fluctuate. When the voltage on the direct current bus is excessively high, the auxiliary power supply circuit may be damaged due to the excessively high voltage, when the voltage on the direct current bus is excessively low, power supplying to the power consumption load in the electronic device is insufficient, and shutdown frequently occurs, resulting in reduction in working reliability of the electronic device. In addition, in an existing driving process of the auxiliary power supply circuit, no-load power consumption of the electronic device is high, and it takes a long time from power obtaining from the direct current bus by the auxiliary power supply circuit to a complete startup, affecting working efficiency of the electronic device.

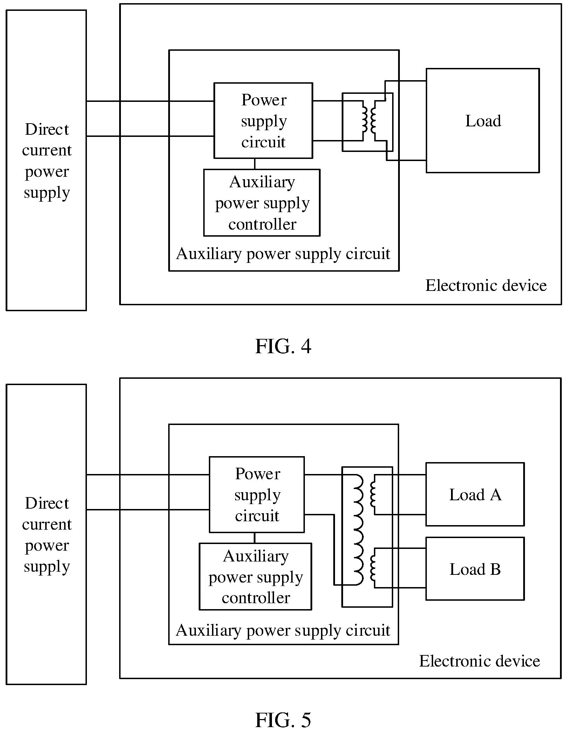

In the auxiliary power supply circuit provided in this application, the auxiliary power supply circuit may include a first switching transistor, at least one second switching transistor, at least one first series resistor, a first capacitor, a transformer, and an auxiliary power supply controller. FIG. 4 is a schematic of another application scenario of an auxiliary power supply circuit according to this application. The auxiliary power supply circuit shown in FIG. 4 includes a power supply circuit, an auxiliary power supply controller, and a transformer. The power supply circuit includes a first switching transistor and at least one second switching transistor (not shown in FIG. 4). A primary-side winding of the transformer may be connected to a positive direct current bus and a negative direct current bus through the power supply circuit, and a secondary-side winding of the transformer is configured to connect to a load. Specifically, the first switching transistor in the power supply circuit may be connected in series to a first capacitor (not shown in FIG. 4) and then connected between the positive direct current bus and the negative direct current bus, the at least one second switching transistor is connected in parallel to two terminals of the first switching transistor, and two terminals of the second switching transistor are connected to one series resistor. Two terminals of the first capacitor are connected to the primary-side winding of the transformer. When the auxiliary power supply circuit obtains power from the direct current bus, the second switching transistor may be turned on based on power supplying from a direct current bus, to conduct a connection between the direct current bus and the first capacitor, so that the first capacitor obtains power from the direct current bus. The auxiliary power supply controller may be connected between the first capacitor and the transformer. The auxiliary power supply controller may obtain power from the first capacitor after the first capacitor is charged, and control, after being started, the first switching transistor to be turned on, to conduct a connection between the direct current bus and the transformer, so that the load obtains power from the secondary-side winding of the transformer. Herein, the second switching transistor is turned off when the first switching transistor is turned on, and when the second switching transistor is turned off, the series resistor connected to the second switching transistor is enabled to be connected in series to a power supply loop, increasing overall resistance of the auxiliary power supply circuit. The newly added series resistor can bear a part of voltage fluctuation on the direct current bus, so that a voltage change amplitude of the primary-side winding of the transformer is reduced, and power supply stability of the auxiliary power supply circuit is improved. When a plurality of second switching transistors are included, the first capacitor may be charged through a plurality of power supply paths, and the auxiliary power supply controller is started faster. In addition, the second switching transistor is turned off when the first switching transistor is turned on, and a path on which the first switching transistor is located supplies power to the transformer, so that some energy losses can be reduced.

In some feasible implementations, the transformer in the auxiliary power supply circuit may be connected to a plurality of loads. FIG. 5 is a schematic of another application scenario of an auxiliary power supply circuit according to this application. The auxiliary power supply circuit shown in FIG. 5 may include a power supply circuit, an auxiliary power supply controller, and a transformer. The power supply circuit includes a first switching transistor and a plurality of second switching transistors (not shown in FIG. 5). A primary-side winding of the transformer may be connected to a positive direct current bus and a negative direct current bus through the power supply circuit. One secondary-side winding of the transformer may be configured to connect to a load A, and another secondary-side winding of the transformer may be configured to connect to a load B. The auxiliary power supply controller may be connected between a first capacitor (not shown in FIG. 5) and the transformer. The auxiliary power supply controller may obtain power from the first capacitor after the first capacitor is charged, and control, after being started, the first switching transistor to be turned on, to conduct a connection between a direct current bus and the transformer, so that the load A and the load B respectively obtain power from the corresponding secondary-side windings of the transformer.

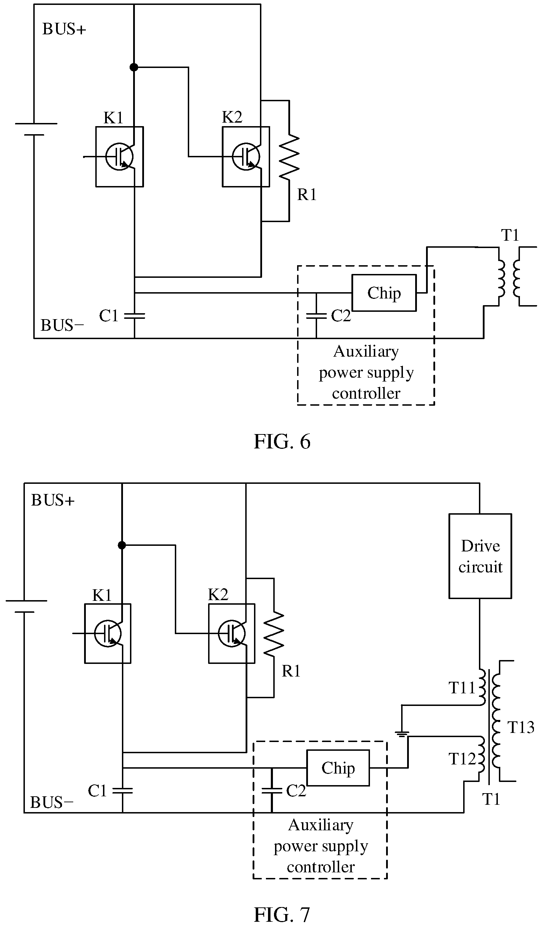

The following describes the auxiliary power supply circuit provided in embodiments of this application by using examples with reference to FIG. 1 to FIG. 14. In some feasible implementations, the auxiliary power supply circuit may be configured to drive a power converter, that is, provide a stable low-voltage direct current for a power consumption component (for example, an auxiliary power supply controller) in a power converter based on an input voltage of the power converter. Specifically, the auxiliary power supply circuit may include a first switching transistor, at least one second switching transistor, a transformer, and an auxiliary power supply controller. A first terminal of the first switching transistor and a first terminal of the second switching transistor are connected to a positive direct current bus, a second terminal of the first switching transistor and a second terminal of the second switching transistor are connected to a negative direct current bus through a first capacitor, a control terminal of the second switching transistor is connected to the first terminal of the first switching transistor, the first terminal of the second switching transistor is connected to the second terminal of the second switching transistor through a first series resistor, two terminals of the first capacitor are connected to a primary-side winding of the transformer, and a primary-side winding of the transformer may be connected to a power conversion circuit in the power converter. FIG. 6 is a schematic of a structure of an auxiliary power supply circuit according to this application. The auxiliary power supply circuit shown in FIG. 6 may include a first switching transistor (which may be represented as a switching transistor K1 for ease of description). A first terminal of the switching transistor K1 may be connected to a positive direct current bus BUS+, and a second terminal of the switching transistor K1 may be connected to a negative direct current bus BUS- through a first capacitor (which may be represented as a capacitor C1 for ease of description). The auxiliary power supply circuit may include a second switching transistor (which may be represented as a switching transistor K2 for ease of description). A first terminal of the switching transistor K2 may be connected to the positive direct current bus BUS+, and a second terminal of the switching transistor K2 may be connected to the negative direct current bus BUS- through the capacitor C1. A control terminal of the switching transistor K2 is connected to the first terminal of the switching transistor K1, and the first terminal of the switching transistor K2 is connected to the second terminal of the switching transistor K2 through a first series resistor (which may be represented as a series resistor R1 for ease of description). Two terminals of the capacitor C1 are connected to a primary-side winding of a transformer T1, and a secondary-side winding of the transformer T1 may be configured to connect to a power conversion circuit in a power converter. An auxiliary power supply controller may be connected between the capacitor C1 and the transformer T1. The auxiliary power supply controller may include a capacitor C2 and a chip. One terminal of the capacitor C2 may be connected to one terminal of the primary-side winding of the transformer T1 through the chip, and the other terminal of the capacitor C2 may be connected to the other terminal of the primary-side winding of the transformer T1. When the auxiliary power supply circuit obtains power from a direct current bus, the switching transistor K2 may be turned on based on power supplying of the direct current bus (that is, the first terminal and the second terminal of the switching transistor K2 are conducted) when the control terminal is powered on, to conduct a connection between the positive direct current bus BUS+ and the capacitor C1, so that the capacitor C1 can obtain power from the direct current bus. The capacitor C2 in the auxiliary power supply controller may obtain power from the capacitor C1 after the capacitor C1 is charged, to be started based on electric energy stored in C2. A first terminal of the primary-side winding of the transformer is connected to the positive direct current bus BUS+ through a drive circuit. After power-on, the auxiliary power supply controller may control the switching transistor K1 to be turned on, and control a switching transistor action in the drive circuit, to control a magnetic flux change of the primary-side winding of the transformer T1, so that the secondary-side winding of the transformer T1 is powered on to supply power to a load connected to the secondary-side winding, and the auxiliary power supply controller may also obtain power from the primary-side winding or the secondary-side winding of the transformer T1. For example, the auxiliary power supply controller obtains power from the primary-side winding of the transformer T1. FIG. 7 is a schematic of another structure of an auxiliary power supply circuit according to this application. In the auxiliary power supply circuit shown in FIG. 7, the primary-side winding of the transformer T1 may include a winding T11 and a self-feeding winding T12. One terminal of the winding T11 is connected to the positive direct current bus BUS+ through the drive circuit, and the other terminal of the winding T11 is grounded, one terminal of the self-feeding winding T12 is connected to the auxiliary power supply controller, and the other terminal of the self-feeding winding T12 is connected to the positive direct current bus BUS-. Herein, the drive circuit may include at least one switching transistor (for example, including two switching transistors connected in series). After power-on, the auxiliary power supply controller may control the switching transistor K1 to be turned on, and control a switching transistor action in the drive circuit to control a magnetic flux change of the winding T11 in the primary-side winding of the transformer T1, so that the winding T11 is powered on. When the winding T11 is powered on, the self-feeding winding T12 and the secondary-side winding T13 are enabled to be powered on, so that the auxiliary power supply controller can obtain power from the self-feeding winding T12, and the secondary-side winding T13 may supply power to the load. In the auxiliary power supply circuit shown in FIG. 6 or FIG. 7, when the switching transistor K1 is turned on, a current supplying power to the control terminal of the switching transistor K2 flows to a path on which the switching transistor K1 is located, and the switching transistor K2 is turned off, so that the series resistor R1 connected to the switching transistor K2 is connected in series to a power supply loop, and overall resistance of the auxiliary power supply circuit is increased. The newly added series resistor R1 can bear a part of voltage fluctuation when a voltage on the direct current bus fluctuates, so that a voltage of the primary-side winding of the transformer T1 is prevented from changing sharply due to the voltage fluctuation on the direct current bus, and power supply stability of the auxiliary power supply circuit is improved. In other words, because a quantity of voltage divider resistors in the auxiliary power supply circuit changes, a high-low voltage hysteresis is formed. Due to a function of the high-low voltage hysteresis, the auxiliary power supply circuit can maintain a power-on state at a lower voltage. In addition, the switching transistor K2 is turned off when the switching transistor K1 is turned on, and the path on which the switching transistor K1 is located supplies power to the transformer T1, so that some energy losses can be reduced.

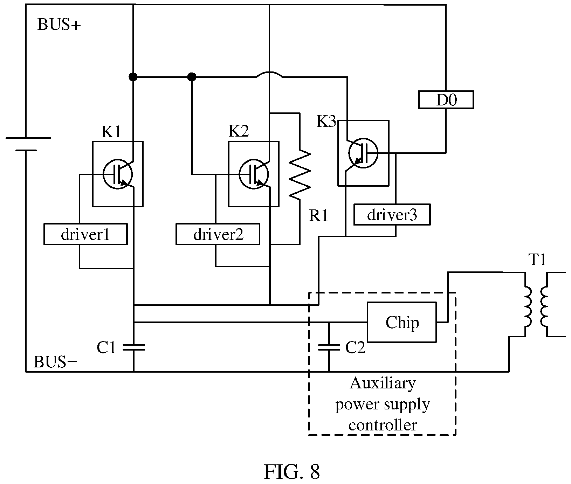

In some feasible implementations, the auxiliary power supply circuit may include a third switching transistor, and a first terminal and a second terminal of the third switching transistor may be respectively connected to the control terminal of the second switching transistor and the second terminal of the second switching transistor, and a control terminal of the third switching transistor is connected to the positive direct current bus through one voltage regulator unit. When a voltage value for two terminals of the voltage regulator unit is greater than a voltage regulating threshold, the voltage regulator unit may conduct a connection between the control terminal of the third switching transistor and the positive direct current bus, so that the third switching transistor is turned on. FIG. 8 is a schematic of another structure of an auxiliary power supply circuit according to this application. The auxiliary power supply circuit shown in FIG. 8 may include a third switching transistor (which may be represented as a switching transistor K3 for ease of description). A first terminal of the switching transistor K3 may be connected to the control terminal of the switching transistor K2, a second terminal of the switching transistor K3 may be connected to the second terminal of the switching transistor K2, and a control terminal of the third switching transistor is connected to the positive direct current bus through a voltage regulator unit D0. Herein, when a voltage on the direct current bus is excessively high, a voltage value for two terminals of the voltage regulator unit may be greater than a voltage regulating threshold. In this case, the voltage regulator unit D0 may conduct a connection between the control terminal of the switching transistor K3 and the positive direct current bus, so that the switching transistor K3 is turned on. When the switching transistor K2 is turned on, the switching transistor K3 is turned on to enable the switching transistor K2 to be turned off, to prevent the switching transistor K2 from being damaged due to an excessively high voltage on the direct current bus. When the switching transistor K1 is turned on, the switching transistor K3 is turned on to divide a voltage for the switching transistor K1, to prevent the switching transistor K1 from being damaged due to an excessively high voltage on the direct current bus. Optionally, the voltage regulator unit D0 may be a voltage regulator diode, an anode of the voltage regulator diode may be connected to the control terminal of the switching transistor K3, and a cathode of the voltage regulator diode is connected to the positive direct current bus. When a voltage on the direct current bus is excessively high, the voltage regulator diode is reversely broken down. In this case, the voltage regulator diode may conduct the connection between the control terminal of the switching transistor K3 and the positive direct current bus, so that the switching transistor K3 is turned on, and the voltage regulator diode also has a divided voltage. This avoids damage caused by an excessively high voltage for two terminals of the switching transistor K3, and improves working safety of the auxiliary power supply circuit.

In some feasible implementations, the auxiliary power supply circuit may include a plurality of drivers. The driver is configured to: adjust a switching transistor control signal sent by the auxiliary power supply controller, so that a high-level voltage peak of the switching transistor control signal reaches a preset voltage value; and send an adjusted switching transistor control signal to a corresponding switching transistor. The auxiliary power supply circuit shown in FIG. 8 is used as an example. Refer to FIG. 8 again. In the auxiliary power supply circuit, the second terminal and the control terminal of the switching transistor K1 may be connected through a driver drive1, the second terminal and the control terminal of the switching transistor K2 may be connected through a driver drive2, and the second terminal and the control terminal of the switching transistor K3 may be connected through a driver drive3. Specifically, the auxiliary power supply controller may send a switching transistor control signal to the driver drive1. The driver drive1 performs high-level voltage peak adjustment based on the received switching transistor control signal, and sends an adjusted switching transistor control signal to the switching transistor K1 (or a gate of the switching transistor K1), to turn on or turn off the switching transistor K1. Herein, working processes of the driver drive2 and the driver drive3 are similar to that of the driver drive1, and details are not described herein again.

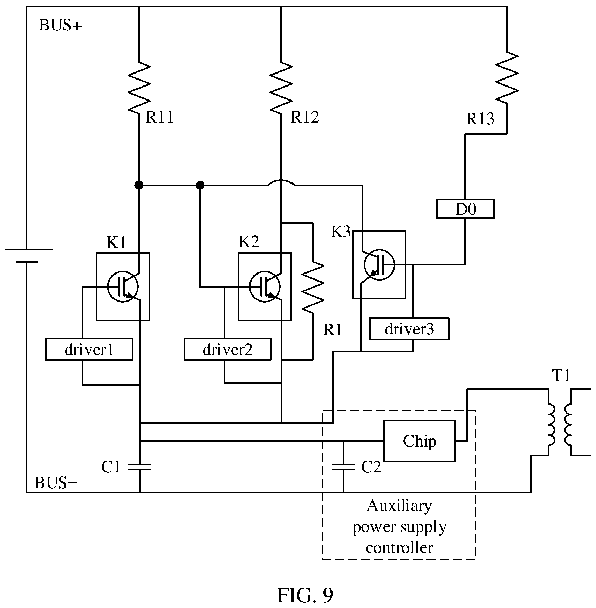

In some feasible implementations, the first terminals of the first switching transistor and the second switching transistor may be connected to the positive direct current bus through one series resistor, and the control terminal of the third switching transistor may be connected to the positive direct current bus sequentially through the voltage regulator unit and one series resistor. FIG. 9 is a schematic of another structure of an auxiliary power supply circuit according to this application. In the auxiliary power supply circuit shown in FIG. 9, the first terminal of the switching transistor K1 may be connected to the positive direct current bus through one series resistor R11, and the first terminal of the switching transistor K2 may be connected to the positive direct current bus through one series resistor R12, the control terminal of the switching transistor K3 is connected to the positive direct current bus sequentially through the voltage regulator unit D0 and one series resistor R13. The series resistor R1, the series resistor R12, and the series resistor R13 may respectively divide voltages for the switching transistor K1, the switching transistor K2, and the switching transistor K3, to prevent voltages at two terminals of the switching transistor K1, the switching transistor K2, and the switching transistor K3 from being excessively high.

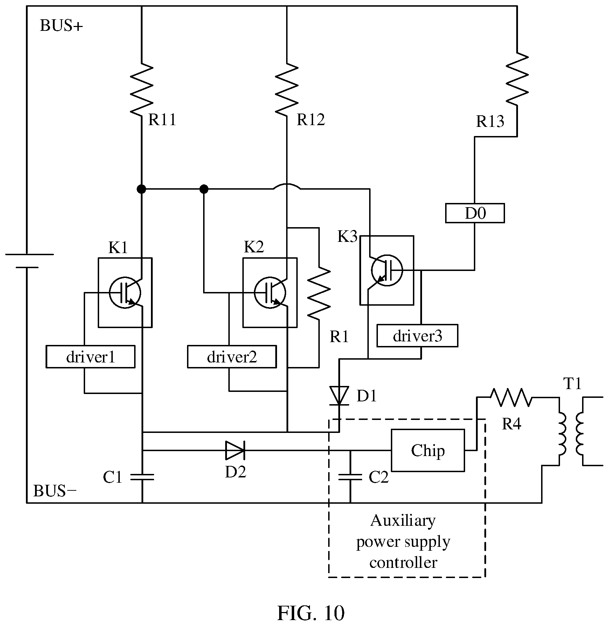

In some feasible implementations, the second terminal of the third switching transistor may be connected to the second terminal of the second switching transistor through a diode, and a connection terminal between the first switching transistor and the first capacitor is connected to the primary-side winding of the transformer through another diode. FIG. 10 is a schematic of another structure of an auxiliary power supply circuit according to this application. In the auxiliary power supply circuit shown in FIG. 10, the second terminal of the switching transistor K3 may be connected to an anode of a diode D 1, and a cathode of the diode D1 is connected to the second terminal of the switching transistor K2. The diode D1 can prevent a current flowing through the switching transistor K1 or the switching transistor K2 from flowing back to the switching transistor K3. In addition, one terminal of the capacitor C1 may be connected to the transformer T1 through a diode D2, and the diode D2 can prevent a current flowing to the transformer T1 from flowing back to the switching transistor K1 and the switching transistor K2, to prevent the switching transistor from being damaged due to flowing back of the current.

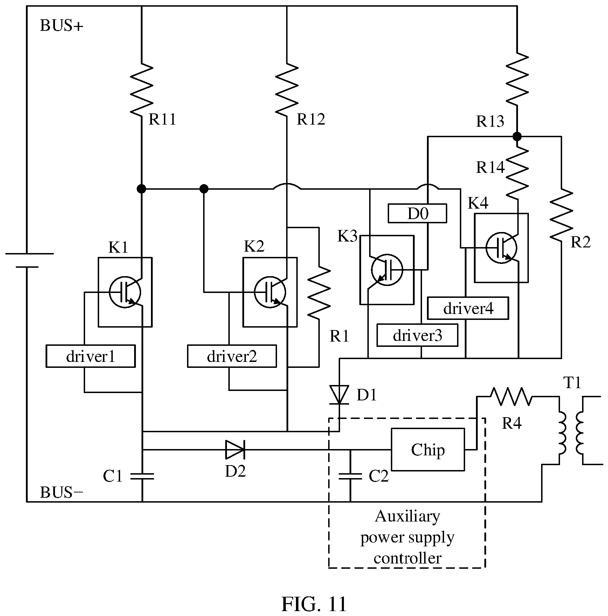

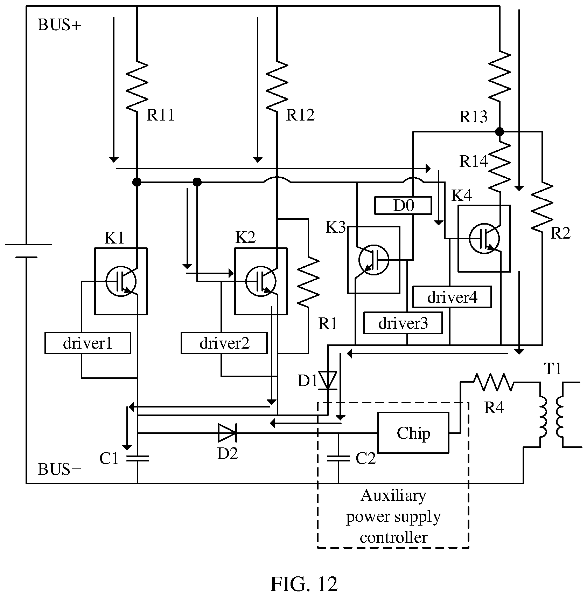

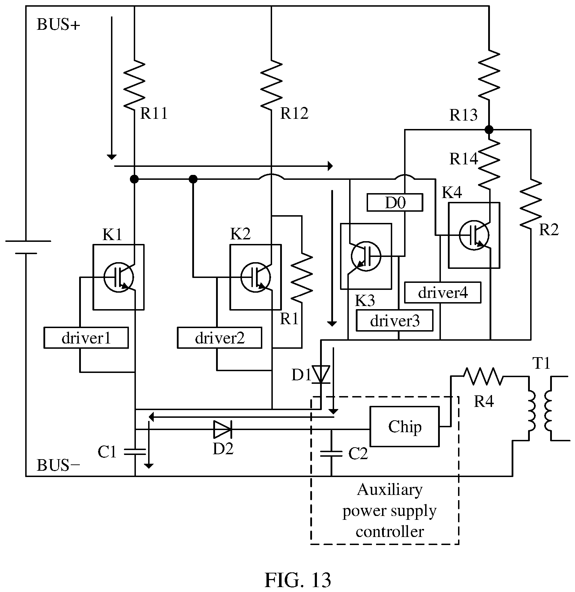

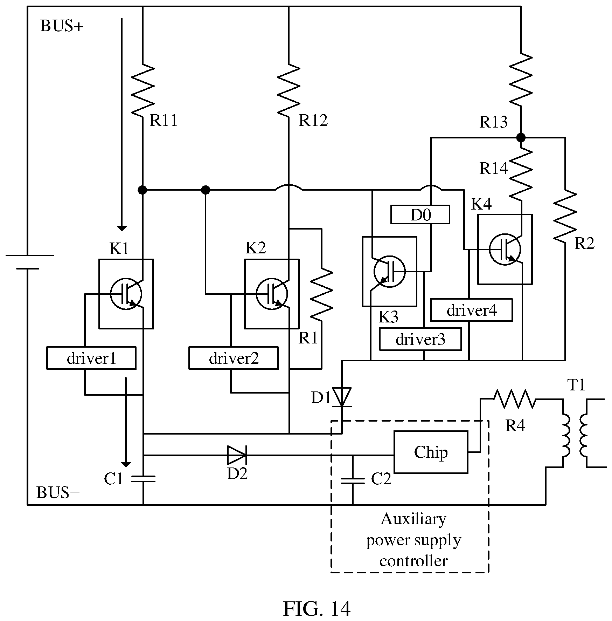

In some feasible implementations, the auxiliary power supply circuit may include a plurality of second switching transistors. For example, the auxiliary power supply circuit includes two second switching transistors. A first terminal of one of the two second switching transistors may be connected to the control terminal of the third switching transistor through the voltage regulator unit. FIG. 11 is a schematic of another structure of an auxiliary power supply circuit according to this application. The auxiliary power supply circuit shown in FIG. 11 may include another second switching transistor (which may be represented as a switching transistor K4 for ease of description) different from the switching transistor K2. A first terminal of the switching transistor K4 may be connected to the voltage regulator unit and the positive direct current bus, and a second terminal of the switching transistor K4 may be connected to the negative direct current bus through the capacitor C1. A control terminal of the switching transistor K4 is connected to the first terminal of the switching transistor K1, and the first terminal of the switching transistor K4 is connected to the second terminal of the switching transistor K4 through a first series resistor (which may be represented as a series resistor R2 for ease of description). Further, the first terminal of the switching transistor K4 may be connected to the positive direct current bus through a series resistor R13 and a series resistor R14. The series resistor R13 and the series resistor R14 may divide a voltage, to prevent an excessively high voltage for two terminals of the switching transistor K4. Herein, when the auxiliary power supply circuit obtains power from the direct current bus, the switching transistor K4 and the switching transistor K2 may be simultaneously turned on based on power supplying of the direct current bus, to conduct a connection between the positive direct current bus and the capacitor C1, so that the capacitor C1 can obtain power from the direct current bus. FIG. 12 is a schematic of another structure of an auxiliary power supply circuit according to this application. When the auxiliary power supply circuit obtains power from the direct current bus, a current from the direct current bus may separately flow to the control terminal of the switching transistor K2 and the control terminal of the switching transistor K4, and the switching transistor K2 and the switching transistor K4 are turned on based on power supplying of the direct current bus. After the switching transistor K2 and the switching transistor K4 are turned on, the capacitor C1 may be charged through a power supply path on which the switching transistor K2 is located (which sequentially passes through the series resistor R12 and the switching transistor K2) and a power supply path on which the switching transistor K4 is located (which sequentially passes through the series resistor R13, the series resistor R14, the switching transistor K4, and the diode D1). When a voltage on the direct current bus is excessively high, a voltage value for two terminals of the voltage regulator unit may be greater than a voltage regulating threshold. In this case, the voltage regulator unit D0 may conduct a connection between the control terminal of the switching transistor K3 to the positive direct current bus, so that the switching transistor K3 is turned on, and the switching transistor K4 and the switching transistor K2 may be simultaneously turned off when the switching transistor K3 is turned on. FIG. 13 is a schematic of another structure of an auxiliary power supply circuit according to this application. After the switching transistor K3 is turned on, the switching transistor K4 and the switching transistor K2 are turned off, and the capacitor C1 may be charged through a power supply path on which the switching transistor K3 is located (which sequentially passes through the series resistor R11, the switching transistor K3, and the diode D1). The capacitor C2 in the auxiliary power supply controller may obtain power from the capacitor C1 after the capacitor C1 is charged, to be started based on electric energy stored in C2. The first terminal of the primary-side winding of the transformer is connected to the positive direct current bus BUS+ through the drive circuit. After power-on, the auxiliary power supply controller may control the switching transistor K1 to be turned on, and the switching transistor K4 and the switching transistor K2 may be turned off when the switching transistor K1 is turned on. FIG. 14 is a schematic of another structure of an auxiliary power supply circuit according to this application. After the switching transistor K1 is turned on, the switching transistor K4 and the switching transistor K2 are turned off, and the capacitor C1 may be charged through a power supply path on which the switching transistor K1 is located (which sequentially passes through the series resistor R11 and the switching transistor K1). The switching transistor K4 and the switching transistor K2 are turned off, so that the series resistor R2 connected to the switching transistor K4 and the series resistor R1 connected to the switching transistor K2 are connected in series to a power supply loop, increasing and overall resistance of the auxiliary power supply circuit. The newly added series resistor R1 can bear a part of voltage fluctuation when the voltage on the direct current bus fluctuates, so that a voltage of the primary-side winding of the transformer T1 is prevented from changing sharply due to the voltage fluctuation on the direct current bus, and power supply stability of the auxiliary power supply circuit is improved. In addition, in the foregoing charging process of the capacitor C1, because the capacitor C1 may be charged through the plurality of power supply paths on which the switching transistor K2 and the switching transistor K4 are located, the capacitor C1 is charged faster, and the auxiliary power supply controller is started faster.

In some feasible implementations, each switching transistor in the auxiliary power supply circuit may be a metal-oxide-semiconductor field-effect transistor (Metal-Oxide-Semiconductor Field-Effect Transistor, MOSFET), which is referred to as a MOS transistor for short, or may be an insulated gate bipolar transistor (insulated gate bipolar transistor, IGBT), a triode, or the like. This is not limited herein. Specifically, when the switching transistor in the auxiliary power supply circuit is a MOS transistor, a first terminal of each switching transistor is a drain, a second connection terminal is a source, and a control terminal is a gate. Alternatively, when the switching transistor in the auxiliary power supply circuit is an IGBT transistor, a first terminal of each switching transistor is a collector, a second terminal is an emitter, and a control terminal is a gate, and when the switching transistor in the auxiliary power supply circuit is a triode, a first terminal of each switching transistor is a collector, a second terminal is an emitter, and a control terminal is a base.

In this application, a power supply circuit in an auxiliary power supply circuit includes a first switching transistor and at least one second switching transistor. The first switching transistor in the power supply circuit may be connected in series to a first capacitor and then connected between a positive direct current bus and a negative direct current bus. The at least one second switching transistor is connected in parallel to two terminals of the first switching transistor, and two terminals of the second switching transistor are connected to one series resistor. Two terminals of the first capacitor are connected to a primary-side winding of a transformer. When the auxiliary power supply circuit obtains power from the direct current bus, the second switching transistor may be turned on based on power supplying from a direct current bus, to conduct a connection between the direct current bus and the first capacitor, so that the first capacitor obtains power from the direct current bus. An auxiliary power supply controller may be connected between the first capacitor and the transformer. The auxiliary power supply controller may obtain power from the first capacitor after the first capacitor is charged, and control, after being started, the first switching transistor to be turned on, to conduct a connection between the direct current bus and the transformer, so that a load obtains power from a secondary-side winding of the transformer. Herein, the second switching transistor is turned off when the first switching transistor is turned on, and when the second switching transistor is turned off, the series resistor connected to the second switching transistor is enabled to be connected in series to a power supply loop, increasing overall resistance of the auxiliary power supply circuit. The newly added series resistor can bear a part of voltage fluctuation on the direct current bus, so that a voltage change amplitude of the primary-side winding of the transformer is reduced, and power supply stability of the auxiliary power supply circuit is improved. When a plurality of second switching transistors are included, the first capacitor may be charged through a plurality of power supply paths, and the auxiliary power supply controller is started faster. In addition, the second switching transistor is turned off when the first switching transistor is turned on, and a path on which the first switching transistor is located supplies power to the transformer, so that some energy losses can be reduced.

## Claims

1. A power converter, wherein the power converter comprises a power conversion circuit, an auxiliary power supply circuit, and a power conversion controller, an input terminal of the power conversion circuit is configured to connect to a direct current power supply through a direct current bus, and the auxiliary power supply circuit is connected in parallel to the direct current bus;
the auxiliary power supply circuit comprises a first switching transistor, at least one second switching transistor, at least one first series resistor, a transformer, a first capacitor, and an auxiliary power supply controller;
a first terminal of the first switching transistor and a first terminal of the second switching transistor are connected to a positive direct current bus, a second terminal of the first switching transistor and a second terminal of the second switching transistor are connected to a negative direct current bus through the first capacitor, a control terminal of the second switching transistor is connected to the first terminal of the first switching transistor, the first terminal of the second switching transistor is connected to the second terminal of the second switching transistor through the first series resistor, two terminals of the first capacitor are connected to two terminals of a primary-side winding of the transformer, a first terminal of the primary-side winding of the transformer is connected to the positive direct current bus through a drive circuit, and a second terminal of the primary-side winding of the transformer is connected to the negative direct current bus;
the second switching transistor is configured to conduct an electrical connection between the positive direct current bus and the first capacitor, and is turned off when the first switching transistor is turned on;
the first capacitor is configured to supply power to the auxiliary power supply controller; and
the auxiliary power supply controller is configured to: after power-on, control the first switching transistor to be turned on, and control a switching transistor action in the drive circuit to control a magnetic flux change of the primary-side winding of the transformer, so that the primary-side winding or a secondary-side winding of the transformer supplies power to the power conversion controller.

2. The power converter according to claim 1, wherein the auxiliary power supply controller is connected between the first capacitor and the primary-side winding of the transformer, and the auxiliary power supply controller is configured to: after the first switch is turned on, control the switching transistor action in the drive circuit to control the magnetic flux change of the primary-side winding of the transformer, so that the primary-side winding of the transformer supplies power to the power conversion controller.

3. The power converter according to claim 2, wherein the auxiliary power supply circuit comprises a third switching transistor, a first terminal and a second terminal of the third switching transistor are respectively connected to the control terminal of the second switching transistor and the second terminal of the second switching transistor, and a control terminal of the third switching transistor is connected to the positive direct current bus through a voltage regulator unit; and
the voltage regulator unit is configured to: when a voltage value for two terminals of the voltage regulator unit is greater than a voltage regulating threshold, conduct a connection between the control terminal of the third switching transistor and the positive direct current bus, so that the third switching transistor is turned on and the second switching transistor is turned off.

4. The power converter according to claim 3, wherein the voltage regulator unit is a voltage regulator diode, an anode of the voltage regulator diode is connected to the control terminal of the third switching transistor, and a cathode of the voltage regulator diode is connected to the positive direct current bus.

5. The power converter according to any one of claims 1 to 4, wherein the switching transistor in the auxiliary power supply circuit is a MOS transistor, a first terminal of each switching transistor is a drain, a second terminal is a source, and a control terminal is a gate; or
the switching transistor in the auxiliary power supply circuit is an IGBT transistor, a first terminal of each switching transistor is a collector, a second terminal is an emitter, and a control terminal is a gate; or
the switching transistor in the auxiliary power supply circuit is a triode, a first terminal of each switching transistor is a collector, a second terminal is an emitter, and a control terminal is a base.

6. The power converter according to any one of claims 3 to 5, wherein the first terminals of the first switching transistor and the second switching transistor are connected to the positive direct current bus through one second series resistor, and the control terminal of the third switching transistor is connected to the positive direct current bus sequentially through the voltage regulator unit and one second series resistor.

7. The power converter according to any one of claims 3 to 6, wherein the second terminal of the third switching transistor is connected to the second terminal of the second switching transistor through a diode, and a connection terminal between the first switching transistor and the first capacitor is connected to the primary-side winding of the transformer through another diode.

8. The power converter according to any one of claims 3 to 7, wherein the auxiliary power supply circuit comprises two second switching transistors, and a first terminal of one of the two second switching transistors is connected to the control terminal of the third switching transistor through the voltage regulator unit.

9. An auxiliary power supply circuit, wherein the auxiliary power supply circuit comprises a first switching transistor, at least one second switching transistor, at least one first series resistor, a transformer, a first capacitor, and an auxiliary power supply controller;
a first terminal of the first switching transistor and a first terminal of the second switching transistor are connected to a positive direct current bus, a second terminal of the first switching transistor and a second terminal of the second switching transistor are connected to a negative direct current bus through the first capacitor, a control terminal of the second switching transistor is connected to the first terminal of the first switching transistor, the first terminal of the second switching transistor is connected to the second terminal of the second switching transistor through the first series resistor, two terminals of the first capacitor are connected to two terminals of a primary-side winding of the transformer, a first terminal of the primary-side winding of the transformer is connected to the positive direct current bus through a drive circuit, and a second terminal of the primary-side winding of the transformer is connected to the negative direct current bus;
the second switching transistor is configured to conduct a connection between the positive direct current bus and the first capacitor, and is turned off when the first switching transistor is turned on;
the first capacitor is configured to supply power to the auxiliary power supply controller; and
the auxiliary power supply controller is configured to: after power-on, control the first switch to be turned on, and control a switching transistor action in the drive circuit to change a magnetic flux of the primary-side winding of the transformer, so that a secondary-side winding of the transformer supplies power to a load.

10. The auxiliary power supply circuit according to claim 9, wherein the auxiliary power supply controller is connected between the first capacitor and the transformer.

11. The auxiliary power supply circuit according to claim 10, wherein the auxiliary power supply circuit comprises a third switching transistor, a first terminal and a second terminal of the third switching transistor are respectively connected to the control terminal of the second switching transistor and the second terminal of the second switching transistor, and a control terminal of the third switching transistor is connected to the positive direct current bus through a voltage regulator unit; and
the voltage regulator unit is configured to: when a voltage value for two terminals of the voltage regulator unit is greater than a voltage regulating threshold, conduct a connection between the control terminal of the third switching transistor and the positive direct current bus, so that the third switching transistor is turned on and the second switching transistor is turned off.

12. The auxiliary power supply circuit according to claim 11, wherein the voltage regulator unit is a voltage regulator diode, an anode of the voltage regulator diode is connected to the control terminal of the third switching transistor, and a cathode of the voltage regulator diode is connected to the positive direct current bus.

13. The auxiliary power supply circuit according to any one of claims 9 to 12, wherein the switching transistor in the auxiliary power supply circuit is a MOS transistor, a first terminal of each switching transistor is a drain, a second connection terminal is a source, and a control terminal is a gate; or
the switching transistor in the auxiliary power supply circuit is an IGBT transistor, a first terminal of each switching transistor is a collector, a second terminal is an emitter, and a control terminal is a gate; or
the switching transistor in the auxiliary power supply circuit is a triode, a first terminal of each switching transistor is a collector, a second terminal is an emitter, and a control terminal is a base.

14. The auxiliary power supply circuit according to any one of claims 11 to 13, wherein the first terminals of the first switching transistor and the second switching transistor are connected to the positive direct current bus through one series resistor, and the control terminal of the third switching transistor is connected to the positive direct current bus sequentially through the voltage regulator unit and one series resistor.

15. The auxiliary power supply circuit according to any one of claims 11 to 14, wherein the second terminal of the third switching transistor is connected to the second terminal of the second switching transistor through a diode, and a connection terminal between the first switching transistor and the first capacitor is connected to the primary-side winding of the transformer through another diode.
